# EUROPEAN PATENT APPLICATION

(11) **EP 2 837 826 A1**
(43) Date of publication of application: **18.02.2015**
(21) Application number: 14174436.7
(22) Date of filing: 26.06.2014
(51) Int. Cl.: F04B 11/00, F04B 23/02, F16L 19/02, F16L 37/00, F16L 47/26, F16L 47/28

(54) **Plumbing connection for the tank of a pump assembly**

(30) Priority: 08.07.2013 IT PD20130038 U
(71) Applicant: Dab Pumps S.p.A., 35035 Mestrino (Padova) (IT)
(72) Inventor: Iacoponi, Alessandro, 56021 Cascina, Frazione S. Lorenzo a Pagnatico (PI) (IT); Sinico, Francesco, 36075 Montecchio Maggiore (VI) (IT)
(74) Representative: Modiano, Micaela Nadia

(57) **Abstract**

A plumbing connection (10) for the tank of a pump assembly, provided with a tubular element (11) for mating with a similar element which is integral with the pump body (12) of the pump assembly, the plumbing connection (10) comprising a first element (13) to be arranged inside the tank (14) and to which can be coupled, at a hole of the tank (14), for the passage of liquid toward the pump body (12), a second element (15) to be arranged outside the tank (14), provided in a single piece and comprising the tubular element (11), the first (13) and second (15) elements being adapted to be coupled to and made integral with the tank (14) by way of fixing means (16).

## Description

The present invention relates to a plumbing connection for the tank of a pump assembly.

For supplying water systems, nowadays the installation is widespread of pumping assemblies which comprise a pump body associated with a driving inverter and an accumulation tank that acts as a lung for the delivery, such as for example an expansion tank.

During operation liquid flows between the pump body and the tank, which are conveniently connected with two respective tubular elements coupled end to end by way of a connector.

The tubular element that is integral with the tank is typically welded to the body of the tank, in order to prevent leaks of liquid.

However, the process of welding the tubular element to the tank is wasteful, both in economic terms and in terms of time, in addition to necessitating specialist labor.

Another drawback is associated with assembling the pump assembly and is due to the fact that, in order to ensure the coupling of the tank with the pump body, the size and shape of the tubular element of the tank must be compatible with those of the tubular portion of the pump body and with the connector that connects them.

The aim of the present invention is to overcome the above mentioned drawbacks, by providing a plumbing connection for a tank of a pump assembly with a tubular element associated with the body of the tank without welding and which can be easily adapted to the dimensions of the tubular portion of the pump and to the connector that connects pump and tank.

Within this aim, an object of the invention is to be able to apply connectors of different types for different pumps to a tank.

Another object of the invention is to provide an association of the tubular element with the tank which is lower in cost than conventional welding.

This aim and these and other objects which will become better apparent hereinafter are achieved by a plumbing connection for the tank of a pump assembly, provided with a tubular element for mating with a similar element which is integral with the pump body of said pump assembly, said plumbing connection being characterized in that it comprises a first element to be arranged inside said tank and to which can be coupled, at a hole of said tank, for the passage of liquid toward said pump body, a second element to be arranged outside said tank, provided in a single piece and comprising said tubular element, said first and second elements being adapted to be coupled to and made integral with said tank by way of fixing means.

Further characteristics and advantages of the invention will become better apparent from the description of a plumbing connection, according to the invention, which is illustrated by way of non-limiting example in the accompanying drawings wherein:
Figure 1 is a perspective view of the plumbing connection according to the invention associated with a tank;
Figure 2 is an exploded perspective view of the plumbing connection according to the invention;
Figure 3 is an enlarged cross-sectional view of the plumbing connection according to the invention.

With reference to the figures, the plumbing connection according to the invention is generally designated with the reference numeral 10 and is provided with a tubular element 11 for mating with a similar element which is integral with the pump body 12 of the pump assembly.

The plumbing connection 10 comprises a first element 13 to be arranged inside the tank 14 and to which can be coupled, at a hole of the tank 14, for the passage of liquid toward the pump body 12, a second element 15 to be arranged outside the tank 14, provided in a single piece and comprising the tubular element 11.

The first element 13 and the second element 15 are adapted to be coupled to and at the same time made integral with the tank 14 by way of fixing means 16.

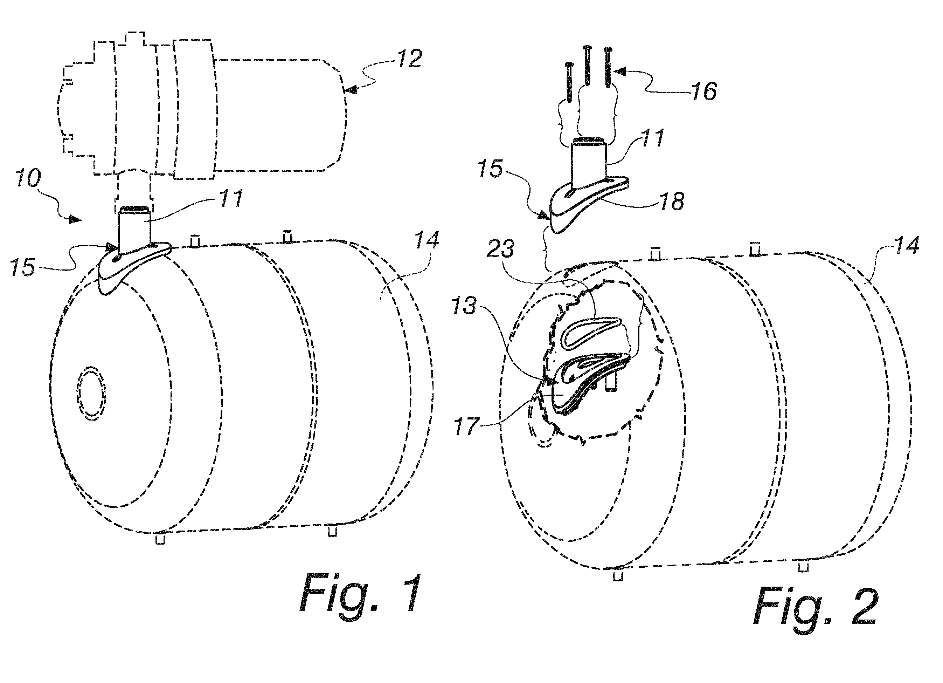

As can clearly be seen in the exploded view in Figure 2, the first element 13 has a main body 17 that is perforated, substantially flat and shaped complementarily to the inner wall of the tank 14 about the hole for the passage of the liquid toward the pump body 12.

The second element 15 has a portion of association 18 with the tank 14, from which the tubular element 11 extends.

The portion of association 18 with the tubular element 11 are the parts outside the tank 14 and thus are the only parts that can be seen when the plumbing connection 10 is assembled, as illustrated in Figure 1.

A rim 19 which is perimetric to the passage hole of the tank 14 is interposed between the main body 17 and the portion of association 18.

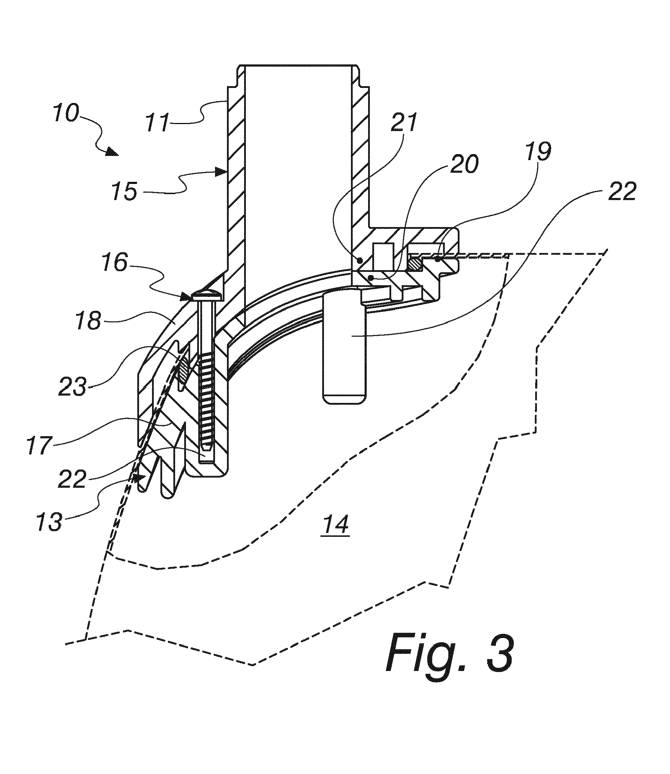

As is clear from Figure 2 and even clearer from Figure 3, the main body 17 has a first coupling portion 20 that faces, at the passage hole of the tank 14, toward a second coupling portion 21 of the portion of association 18 of the second element 15.

The two elements, first 13 and second 15, are coupled by way of the fixing means 16, which consist of three screws.

In particular it should be noted that the three screws pass through both of the elements, first 13 and second 15, at the coupling portions, respectively the first 20 and the second 21, thus being arranged inside adapted receptacles 22 that extend from the main body 17 of the first element 13 inside the tank 14.

The fixing means 16 render the first element 13 and the second element 15 integral with the tank 14, in addition to coupling them together according to a single possible mutual orientation, with opening of the first at the tubular element 11 of the second.

From the exploded view in Figure 2 and in the cross-section in Figure 3 it can be seen that the plumbing connection 10 according to the invention also comprises an O-ring gasket 23 for the hydraulic seal, which is interposed between the main body 17 of the first element 13 and the wall of the tank 14, at the passage hole of the liquid.

Advantageously, the first element 13 and the second element 15 of the plumbing connection 10 according to the invention can be made, preferably but not exclusively, from composite material that comprises polypropylene and 30% glass fibers.

The use of the connection according to the invention is the following.

As can be seen from the first two figures, and as is known, the tank 14 is constituted by two parts to be joined. With the tank 14 open, the first element 13 provided with an O-ring gasket 23 is inserted into the tank 14 and placed against the inner wall of the latter with its opening at the hole for the passage of liquid.

The second element 15 is positioned with the portion of association 18 on the tank 14, on the outer side, with its second coupling portion 21 facing the first coupling portion 20 of the first element 15.

The two elements are thus coupled and fixed to the tank 14 by way of the fixing means 16, so as to close between them the rim 19 of the tank 14, perimetric to the hole for the passage of the liquid.

With the coupling of the two elements complete, it is possible to close the tank 14 by joining the two parts that make it up.

It should be noted that the plumbing connection can be assembled easily and quickly.

Advantageously, in the plumbing connection a second element can be used which is provided with a tubular element of dimensions in cross-section that are compatible with those of the corresponding element of the pump body.

Furthermore the second element 15 can comprise a tubular element 11 that is compatible in shape and dimensions with those of a particular connector, in order to be capable of connecting the same tank to different pumps.

In practice it has been found that the invention fully achieves the intended aim and objects, by providing a plumbing connection that can be assembled easily and quickly while avoiding the operations of welding the tubular element, and which is thus also economically more advantageous.

With the invention, furthermore, a solution has been proposed that is more flexible than welding, because it is easily adaptable to the pump with which the tank is to be connected.

In practice the materials employed, provided they are compatible with the specific use, and the dimensions, may be any according to requirements and to the state of the art.

The disclosures in Italian Utility Model Application No. PD2013U000038 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A plumbing connection (10) for the tank of a pump assembly, provided with a tubular element (11) for mating with a similar element which is integral with the pump body (12) of said pump assembly, said plumbing connection (10) being **characterized in that** it comprises a first element (13) to be arranged inside said tank (14) and to which can be coupled, at a hole of said tank (14), for the passage of liquid toward said pump body (12), a second element (15) to be arranged outside said tank (14), provided in a single piece and comprising said tubular element (11), said first (13) and second (15) elements being adapted to be coupled to and made integral with said tank (14) by way of fixing means (16).

2. The plumbing connection according to claim 1, **characterized in that** said first element (13) has a perforated main body (17), which is substantially flat and shaped complementarily to the inner wall of said tank (14) about its hole for the passage of liquid toward the pump body (12) and said second element (15) has a portion of association (18) with said tank (14), from which extends said tubular element (11), a rim (19) of said tank (14) which is perimetric to the passage hole being interposed between said main body (17) and said portion of association (18).

3. The plumbing connection according to claim 2, **characterized in that** said main body (17) has a first coupling portion (20) that faces, at the passage hole of said tank (14), toward a second coupling portion (21) of said portion of association (18) of said second element (15), said elements, first (13) and second (15), being coupled by way of said fixing means (16) at said coupling portions (20, 21) which make them integral with said tank (14).

4. The plumbing connection according to claim 3, **characterized in that** said fixing means (16) consist of at least one screw that passes through both of said elements, first (13) and second (15), at said coupling portions, first (20) and second (21), thus being arranged inside a corresponding receptacle (22) that extends from said main body (17) inside said tank (14).

5. The plumbing connection according to one or more of the preceding claims, **characterized in that** it comprises an O-ring gasket (23) that is interposed between said main body (17) of said first element (13) and the wall of said tank (14), at the passage hole of the liquid.
